# EUROPEAN PATENT APPLICATION

(11) **EP 2 728 540 A1**
(43) Date of publication of application: **07.05.2014**
(21) Application number: 13190505.1
(22) Date of filing: 28.10.2013
(51) Int. Cl.: G06Q 40/04

(54) **Alert investigation system**

(30) Priority: 30.10.2012 US 201261720096 P; 28.11.2012 US 201213687341
(71) Applicant: Millennium IT (USA) Inc., Jersey City, NJ 07310 (US)
(72) Inventor: Ilthizam Fuard, Ahmed, Ratmalana 10350 (LK); Muthukumarana, Harsha, Pitakotte 10100 (LK)
(74) Representative: Rupprecht, Kay

(57) **Abstract**

A rule based alert investigation system, which is able to identify anomalous trading behavior as satisfying a predetermined pattern of trading transactions and events on real time data feeds, filters out eligible trading transactions and events and retains the unique identifiers of the transactions and events for inclusion in one or more data sets associated with the predetermined pattern. The system generates an alert when the eligible transactions and events satisfy the predetermined pattern rules, and retains the eligible event and transaction identifiers in an alert data set along with the generated alert. The system utilizes the retained identifiers to retrieve the underlying actual transactions and events in their chronological order, which eliminates manually locating the transactions and events that triggered the alert. The system further provides commentary articulating the anomalous trading behavior along with the relationships between the eligible transactions and events contained in the alert data set.

## Description

### CROSS-REFERENCE TO RELATED APPLICATIONS

The present application claims the benefit of U.S. Provisional Patent Application Serial No. 61/720,096, which was filed on October 30, 2012 and U.S. Utility Patent Application Serial No. 13/687,341, filed November 28, 2012, by Ahmed Ilthizam Fuard and Harsha Muthukumarana for an ALERT INVESTIGATION SYSTEM and is hereby incorporated by reference.

### BACKGROUND OF THE INVENTION

### Field of the Invention

The invention relates generally to systems for analyzing trading activity data and, more particularly, to systems for investigating alerts that correspond to anomalous trading behavior.

### Background Information

Trading alert systems and/or highly skilled individuals employ pattern detection techniques to examine streams of trading activity data and determine when patterns of trading activity meet predetermined criteria for anomalous trading behavior. The systems or individuals thus scrutinize the data for the literally thousands of trades taking place every second, and identify patterns of trading activity that meet the predetermined criteria. When all of the criteria are satisfied, an alert is signaled by the system or individuals.

Once an alert is signaled, the next step is to determine if the pattern of trading activity warrants investigation, remedial or corrective action by the authorities in charge of market oversight. The system or individuals thus further investigate the trading activities occurring during a time span corresponding to the alert, to indentify the respective transactions that constitute the pattern and also to determine which other market activities occurring during the time span of interest are relevant to the investigation. The system or individuals must then analyze the identified transactions and the market activities deemed to be relevant to determine what, if any, relationships exist between two. Accordingly, the systems or individuals must go back through the trading activity data for the many thousands of transactions occurring during the time span of interest, to identify the constituent transactions of the pattern and the relevant market activities. Then the system or individuals must perform an analysis of the data to determine the relationships between the identified transactions and the relevant market activities. This kind of manual investigation is sufficiently time consuming that the investigation cannot be performed in or near real time. Accordingly, remedial or corrective steps are delayed.

### SUMMARY OF THE INVENTION

A rule based trading pattern detecting system, which is able to identify anomalous trading behavior as satisfying a predetermined pattern of trading transactions and events on real time data feeds, filters out eligible trading transactions and events and retains the unique identifiers of the eligible transactions and events for inclusion in one or more data sets associated with the predetermined pattern. The system generates an alert when the eligible transactions and events satisfy the predetermined pattern rules, and retains the eligible event and transaction identifiers in an alert data set along with the generated alert. When investigating the alert, the system then utilizes the retained identifiers to retrieve the underlying actual transactions and events in their chronological order, eliminating the need for manually locating the transactions and events that triggered the alert. The system further provides commentary articulating the anomalous trading behavior along with the relationships between the eligible transactions and events contained in the alert data set.

### BRIEF DESCRIPTION OF THE DRAWINGS

The invention description below refers to the accompanying drawings, of which:
Fig. 1 is a functional block diagram of a system constructed in accordance with the invention;
Fig. 2 is a functional block diagram showing the system of Fig. 1 in more detail;
Figs. 3-7 are screens that illustrate various operations of the system of Fig. 1.

### DETAILED DESCRIPTION OF AN ILLUSTRATIVE EMBODIMENT

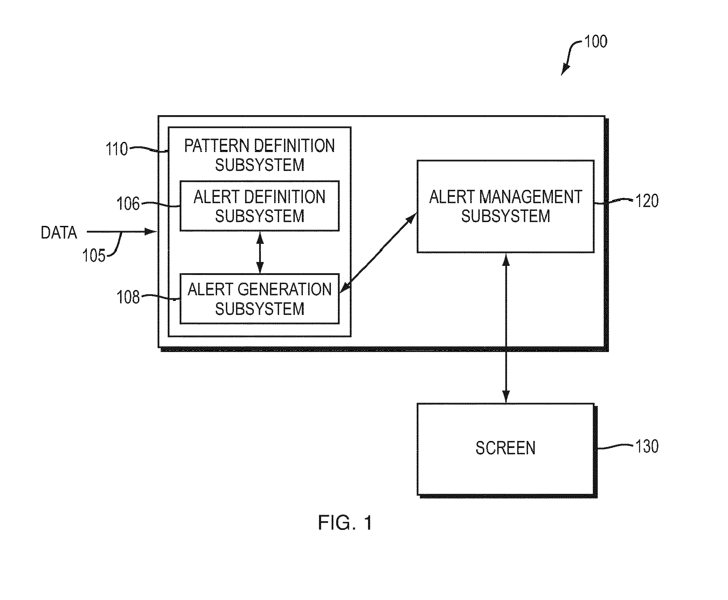

Referring to Fig. 1, a rule-based system 100 includes a pattern definition subsystem 110 and an alert management subsystem 120. The pattern definition subsystem 110 and the alert management system 120 operate together to filter, aggregate, provide commentary, and display trading events, transactions, news and market data, which are provided, in a known manner, to the system over feeds 105 from one or more financial exchanges, industry news sources, and so forth. As discussed in more detail below, the system filters the feed data to identify as "eligible transactions and events" the transactions and events that are relevant to, i.e., meet certain criteria of, the predetermined pattern rules, and associates the eligible transactions and events with the respective predetermined patterns. The system generates an alert when the eligible transactions and events associated with a given predetermined pattern satisfy all of the criteria of the corresponding predetermined pattern rules.

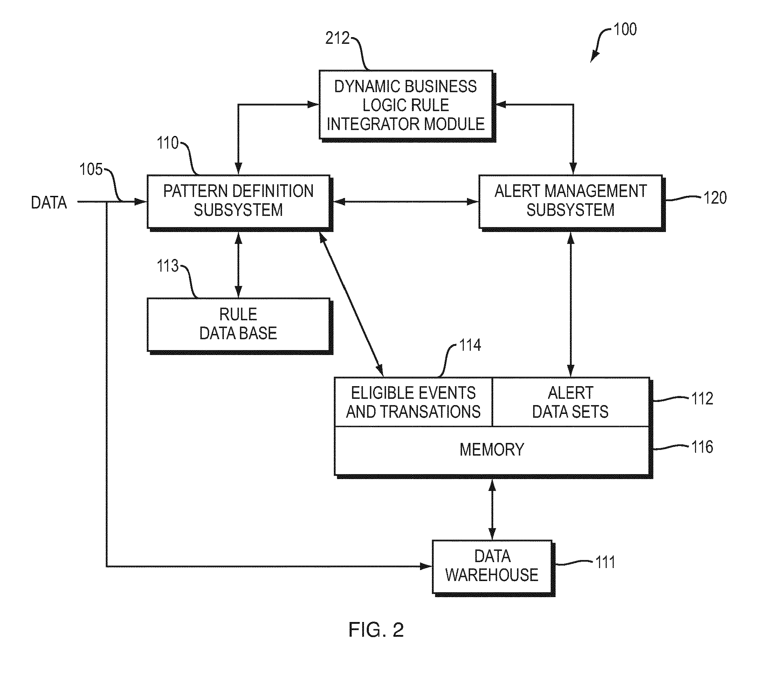

When an alert is generated, the system 100 retains the identifiers of the associated eligible transactions and events and the generated alert in an alert data set 112 (Fig. 2). Using the alert data set, the system provides a user with access to a chronological listing and/or display of the identified eligible transactions and events, as well as commentary articulating the anomalous trading behavior, such as an annotated chronological alert transaction/event log of the identified eligible transactions and events that triggered the alert. The system also provides graphs, lists and so forth, articulating relationships between the triggering transaction and events and relevant market conditions, which are defined by the identified eligible transactions contained in the alert data set. The system displays the alert transaction/event log, and/or lists, graphs and so forth, on one or more interactive screens of a display device 130 associated with a key board or other navigation/data entry device (not shown). Using the displayed log, lists, graphs and so forth the user can seamlessly "reason out" the generated alert and fully analyze the transactions and events that triggered the alert. The user can thus analyze the relationships of the respective triggering transactions and events to one another and their relationships to the relevant market conditions based on the eligible transactions and events identified in the alert data set, to determine if a potential market manipulation or attempted manipulation has occurred.

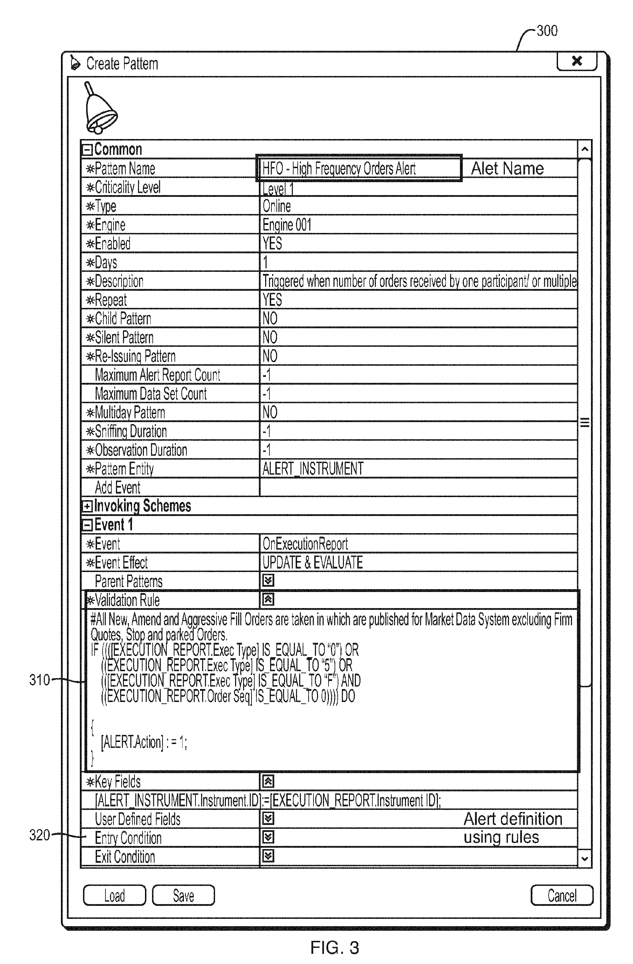

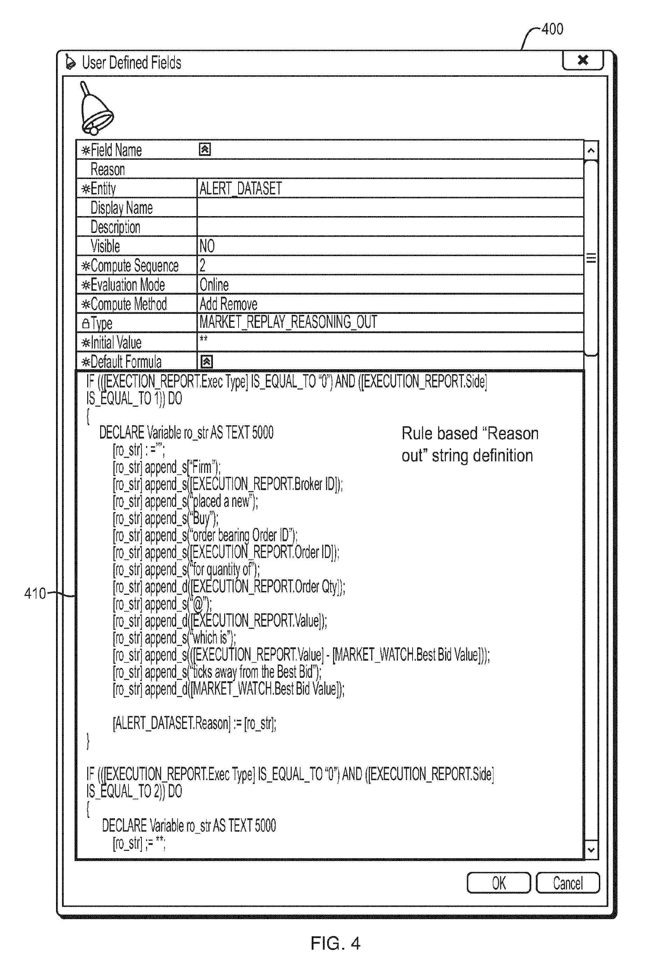

Referring now to Figs. 2-4, the system 100 includes a dynamic business logic rule integrator module 212 that dynamically incorporates user-defined and/or updated pattern rules, alert data management rules, parameters, fields, and so forth, into the operations of the subsystems 110 and 120. The module 212 operates as described in United States Patent 7,124,145, which is incorporated herein in its entirety by reference.

An alert definition subsystem 106 and alert generation subsystem 108 that are included in the pattern definition subsystem 110 provide a user interface 300 through which a user may configure and/or select trading pattern rules to define the anomalous trading activities that will lead to the generation of respective alerts.

The alert definition subsystem 110 also provides a user interface 400 through which the user may configure and/or select the rules that the system follows to provide to the user the commentary that articulates the anomalous trading behavior by, for example, providing the annotated alert transaction event log of the triggering transactions and events, and also highlighting those transactions and events within the relevant market conditions. Thus, the user may configure and/or select rules that define the log annotations, or "reason out strings," for the identified eligible transactions and events that triggered the alert, and also the other listings, graphs or displays that may assist the user in the investigation process.

In an example, the user selects and/or configures the trading activity pattern and alert data management rules that are associated with high frequency order activities. The user, through the interface 300, selects and/or configures trading activity pattern rules to associate eligible transactions and events with the predetermined patterns and aggregate certain of the associated transactions and events that meet particular criteria of the predetermined pattern rules.

The user selects system and/or user defined fields and sub-fields 320, and so forth, and applicable functions and operators, to configure the respective rules. The user may configure a validation rule 310, for example, to aggregate certain eligible transactions, such as new orders, amendments to existing orders, order cancellation before execution, and so forth, while excluding from the aggregation other transactions, such as, firm quotes, stop and parked orders and so forth. Using the rules, the user also defines the conditions, or criteria, that trigger the alerts, by for example, specifying time spans, volume thresholds, and so forth, that is used to aggregate the eligible transactions and events.

The user, through the interface 400, also selects and/or configures the alert data management rules and respective fields, and so forth, that define what information about the alert and the identified eligible transactions is made available to the user and how the information is displayed, i.e., how the system articulates and displays selected information about the alert and the eligible transactions and events and, in particular, the transactions and events that triggered the alert. The user thus configures and/or selects the alert data management rules that define the generated alert, as well as the commentary that corresponds to the triggering eligible transactions and events. Further, the user configures and/or selects the rules that define how the triggering transactions are highlighted in and/or overlaid on various graphs of the relevant market conditions, which are defined based on the eligible transactions and events that are identified in the alert data set.

Once an alert is generated, the system utilizes the alert management subsystem 120, to provide to the user the data and commentary needed to analyze the alert. This eliminates the need for user initiated retrieval of data to identify the anomalous transactions and events that created the alert and/or the effects of the anomalous events and transaction on the relevant market conditions.

In the example, the user specifies the commentary, or reason out strings, to be displayed in the annotated alert transaction/event log using a formula as illustrated by reference numeral 410. The user specifies, within the formula, particular defined terms, such as, firm ID, Order ID, Order Price, and ticks away from Best Bid, and so forth along with descriptive text, or annotation, to articulate the respective triggering transactions and events against the alert. It is this commentary, combined with the transactions and events that the system retrieves using the identifiers contained in the alert data set produced when the alert is generated, that assists the user in the investigation of the alert, as discussed in more detail below.

Once the trading activity pattern rules and the alert data management rules associated with the respective types of alerts are selected, configured and/or updated, the rule integrator module 212 incorporates the rules, definitions, and so forth, into the operations of the system 100. For convenience, the incorporated rules, definitions and so forth are referred to herein as "the predetermined pattern rules."

Using the predetermined pattern rules, the pattern definition subsystem 110 determines the first predetermined criteria and attributes that define the eligible transactions and events, which are transactions and events that are determined to be relevant to an alert that is defined by the predetermined pattern rules. To identify the eligible transactions and events, the system uses the first predetermined criteria and attributes to filter the data provided in real time to the system through the feeds 105.

The system 100 associates the eligible transactions and events with the predetermined patterns and captures the unique identifiers of the respective eligible transactions and events in one or more tables 114 in a memory 116. The unique identifier assigned to a given transaction or event is used by the system to access the transaction or event from a data warehouse 111 in which the feed data are stored. Accordingly, the identifier may consist of an order ID, Trade ID assigned to the transaction by the trading venue. A given transaction or event may be associated with any number of predetermined patterns, and thus, the system maintains appropriate links between the transaction and event identifiers and the predetermined patterns. Upon triggering an alert, the system retains the generated alert and the transaction and event identifiers associated with the corresponding predetermined pattern in an alert data set 112, which will be written to the data warehouse 111 as a corresponding linked list or table.

In the example, the first predetermined criteria utilized to filter out eligible transactions may be a minimum number of orders, a particular exchange, and so forth, and the attributes may be company name, minimum or maximum dollar value, volume of such orders, and so forth. The system 100 filters the data provided over the feeds 105 using the predetermined criteria and attributes and associates with the predetermined pattern rules the eligible transactions and events, that is, the transactions and events that satisfy the associated predetermined criteria and attributes. As discussed, the system 100 also captures the eligible transaction and event identifiers, which are unique over the system.

The data provided over the feeds 105 are also saved in the appropriate data warehouses 111, which are maintained by the system. As discussed, the unique identifiers provide entry into the respective data warehouses, to retrieve the underlying transactions and events associated with the alert.

The system 100 also filters or manipulates the associated eligible transactions and events based on the specific rules and parameters of the predetermined pattern rules. The filtering or manipulation aggregates transactions and events that satisfy the rules and parameters, for example, onto a dynamic list, and the system triggers the generation of an alert when the aggregation satisfies all of the criteria of the predetermined pattern rules. When, in the example, the aggregation meets or exceeds a threshold within a specified time span, the system 100 generates a high frequency order activity alert and provides an associated message to the user. Consequent to the generation of the alert, the system retains the alert and the identifiers of the associated eligible transactions and events in a corresponding alert data set 112. Also, in accordance with the rules, the system uses the associated eligible transactions and events and determines values for various defined terms and combines the corresponding information with the descriptive text against each transaction and event to produce the annotations, or "reason out strings," for the alert. In the example, in accordance with the formula 410, the system produces an annotation "price ticks away from the best ask," along with the actual price ticks and best ask value at the time of the identified eligible transactions and events. The system then saves the annotations as part of the alert data set in data warehouse 111.

In the example, the system associates the eligible transactions and events with the predetermined patterns based on the specified time span, using the time span as a sliding window. If an alert is not generated, the window slides in time and earlier eligible transactions or events that are then outside of window are no longer associated with the predetermined patterns. When an alert is generated, the identifiers for all of the associated eligible transactions and events, i.e., the eligible transactions and events within the window, are retained in the corresponding alert data set.

The system maintains the data for all transactions, even the transactions that are not determined to be eligible transactions, in the data warehouses 111 as raw feed data. The raw data may then be filtered, or mined, in non-real time using different predetermined pattern rules or the same rules with the criteria defined differently, for example, expanded time spans, and so forth, to potentially generate additional alerts and perform the reasoning out from these generated alerts.

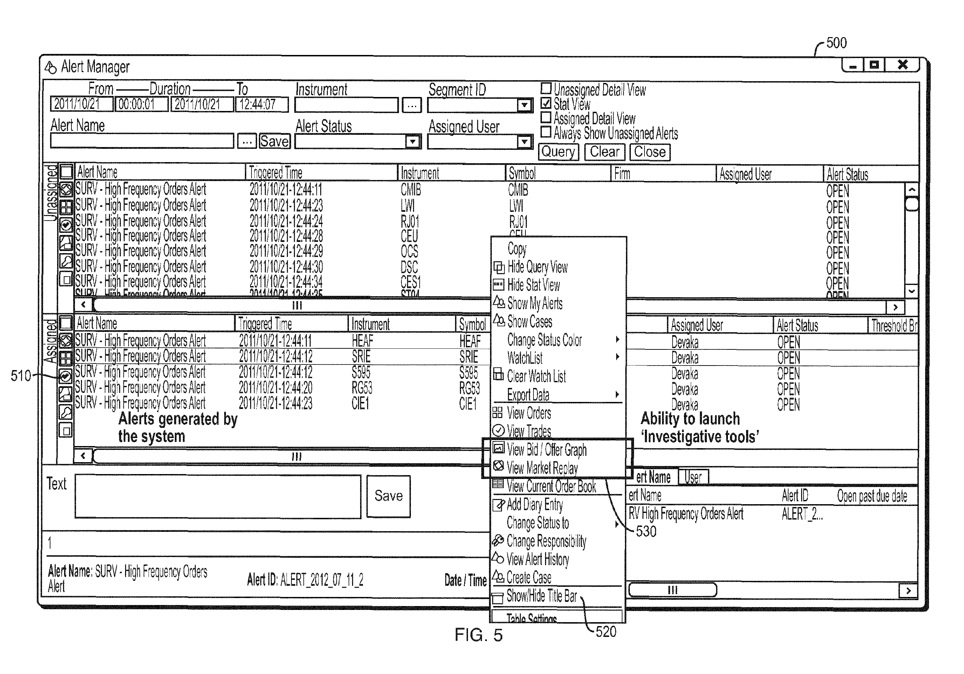

Referring now also to Figs 5-7, once an alert is generated and the alert management subsystem 120 has retained the generated alert, the identifiers of the associated eligible transactions and events, and the annotations in the corresponding alert data set 112, the system operates in accordance with the alert data management rules that are part of the predetermined pattern rules to provide the user access to the commentary and information relating to the transactions and events identified in the alert data set. In the example, the alert data management rules provide to the user as commentary a chronological annotated log of the triggering transactions and events, i.e. the aggregated identified transactions and events on the list.

The alert management system also provides a user with information in the form of annotated graphs, lists and so forth that illustrate the relationships between the transactions and events that triggered the alert and the relevant market, which is defined using the eligible transactions and events that are identified in the alert data set. The system thus provides the user with instant access to the underlying transactions and events that created the alert in the form of the chronological annotations or reasoning out strings, which describe the triggering transactions and events in the context of the generated alert, as well as lists, graphs and so forth that illustrate the relationships between the triggering transactions and events and the relevant market conditions, all in chronological order and based on the alert data set, to assist in the investigation of the alert.

The user has access to the alert transaction/event commentary and the other lists, graphs and so forth through an interface 500. The generated alerts are listed on and selectable from a menu 510. The user may view commentary and information relating to a given generated alert by highlighting the generated alert in the menu 510 and selecting a display option 530 from a menu 520.

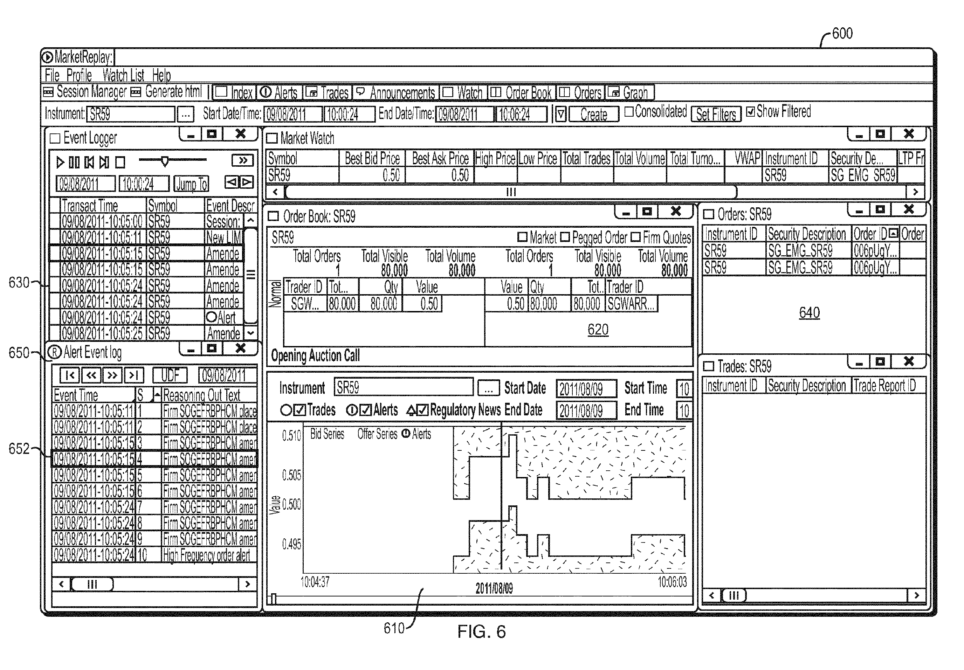

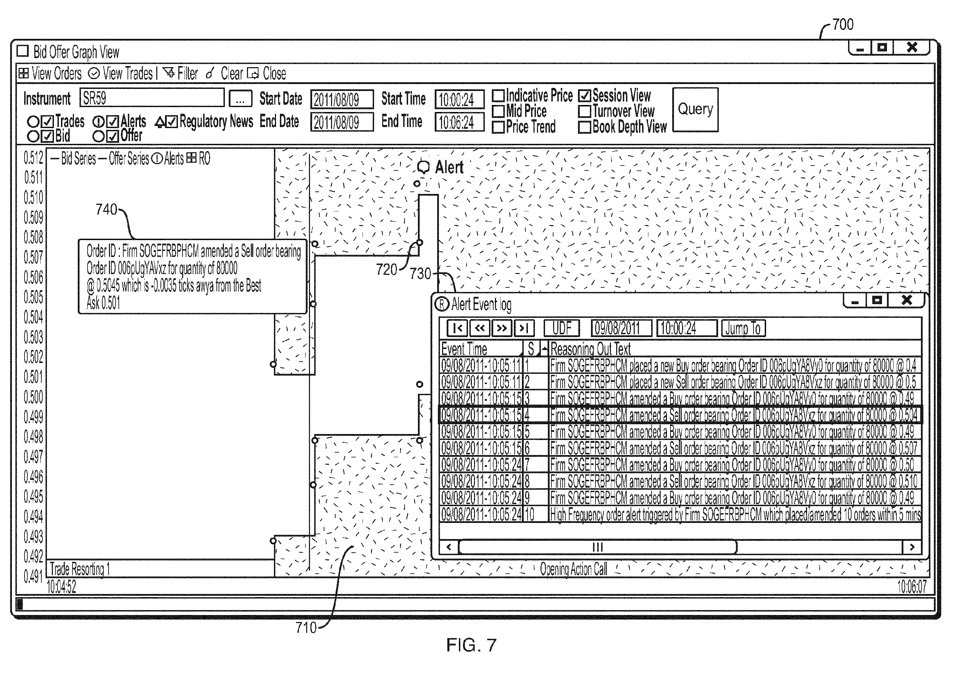

When the user makes the selection from the menus 510 and 520, the alert management subsystem 120 enters the data warehouses 111 using the unique event and transaction identifiers contained in the alert data set, and retrieve the identified eligible transactions and events and the associated commentary required to produce the selected displays. If, for example, the selected option is to view the alert transaction/event log, the system operates in accordance with the rules associated with the log and retrieves the identified triggering transactions and events and the associated commentary, and produces the annotated chronological listing in a display window 650, 730 in an associated graphical user interface (GUI) 600 or 700, as illustrated in Figs. 6 and 7.

The interface 500 also provides a user with access to the other displays that illustrate the relationships between and among the eligible transactions and events that are identified in the alert data set 112. Based on the user selection through the interface, the alert management subsystem 120 uses the unique identifiers from the alert data set to enter the data warehouses 111 to retrieve the transactions and events needed for the requested displays and, through various GUIs, provides the requested displays to the user. The user can thus visualize and readily evaluate the various relationships between and among the triggering transactions and events and the relevant market conditions, in chronological order instantaneously and in essentially real time based on the contents of the alert data set.

Notably, the identification of the eligible transactions and events in the alert data set is based on the operations of the predetermined pattern rules that ultimately define the alert, that is, the filtering out and aggregation of the eligible transactions and events in accordance with the alert definition and alert generation rules. Using the alert data set, the system provides the user with instantaneous access to the information needed to analyze the generated alert, and the user is thus not required to either sift through transactions and events to try and find the anomalous activity and/or attempt to later identify how the transactions and events may relate to one another or the relevant market conditions. Instead, the system 100 seamlessly provides this information to the user based on the operations of the pattern definition subsystem to capture the eligible transactions and events and retain their identifiers as the contents of the alert data, and the operations of the alert management subsystem to annotate and display information about the transactions and events identified in the alert data set.

As shown in Fig. 6, the user may view and evaluate the effects or consequences of the transactions and events that triggered an alert through one or more displays of the relationships between the triggering transactions and events and the relevant market conditions, which are defined by the eligible transactions and events that are identified in the alert data set. The system may show the relationships via a graph 610 or a listing 620, and so forth.

Using, for example, the menu 520 of the interface 500 of Fig. 5, the user may request that the alert data management system provide one or more lists or graphs of particular market conditions with the triggering transactions and events highlighted therein. Accordingly, the system enters the data warehouses 111 using the unique identifiers contained in the alert data set and retrieves the transactions and events needed for the listing or display and provides the requested list or display to the user. For example, the user may request a display or listing of an order book, a transaction/event logger, and so forth, in which the alert triggering transactions and events are highlighted by color, by icon, and so forth, in order to evaluate the circumstances leading up to the generation of the alert.

Referring again to Fig. 7, the user may, in the example, request a display of the identified triggering transactions against a bid-offer spread graph. The alert management subsystem 120 then uses the unique identifiers included in the alert data set 112 and, based on associated rules, definitions and so forth, retrieves from the data warehouse 111 the transactions and events identified in the alert data set. The subsystem 120 then displays the bid-offer spread graph 710, which covers the time span applicable to the generated alert, on a GUI 700 with the triggering transactions and the generated alert depicted on the graph as clickable icons 720. The user may then click on an icon depicting a given triggering transaction and the system displays to the user, in a window 740, the corresponding annotation or reasoning out string from the alert transaction/event log.

From the display in the GUI 700, the user may readily visualize the relationships between the respective triggering transactions and events and/or the relationships between the triggering transactions and events and the relevant market conditions. The user may replay the market transactions, tick by tick, as desired, by moving a cursor along the graph in either direction. Further, by clicking on the icon 720 depicting the generated alert, the user is presented with the entire alert transaction/event log in a window 730, to assist in the investigation of the alert.

Other displays in a market replay GUI 600 may be requested by the user, and the alert management subsystem 120 similarly utilizes the unique identifiers contained in the alert data set to retrieve, from the data warehouses 111, the transactions and events that are required by the applicable alert management rules to produce the requested displays. As appropriate, the subsystem 120 overlays icons representing the triggering transactions on the various displays, as discussed above, and the user may then click on the icons to further analyze the relationship between the triggering transactions and the other displayed information using the reasoning out strings.

The displays may, in the example, show the respective triggering transactions in colors coded to the type of transactions, to allow the user to more easily visualize the relationships between the respective triggering transactions and the relevant market conditions. As the user selects different triggering transactions, the display updates accordingly, to show the exact market conditions at the time of the selected triggering transaction.

As shown in Fig. 6, the user may have open in the GUI 600 multiple windows 610, 620, 630, 640 to provide multiple views of the relationships between the triggering transactions and the relevant market conditions, that is, the eligible transactions and events identified in the alert data set. In the example, the user has open a bid-offer graph in window 610, an order book in window 620, a transaction logger in window 630 and an order query in window 640. The user may navigate through the triggering transactions directly from the alert transaction/event log in the window 650 by clicking on the respective entries 652. As the user selects different triggering transactions from the alert transaction/event log in display window 650, the alert management subsystem 120 synchronously and simultaneously updates the information displayed in the appropriate windows of the GUI 600, to correspond to the time of occurrence of the selected triggering transaction. To do so, the system uses the appropriate identifiers contained in the alert data set to retrieve the needed transactions and events. The user can thus move through the transactions in chronological order or reverse chronological order using the alert transaction/event log and visualize the effects of the transactions on the relevant market conditions, to more fully evaluate the triggering transactions and determine if the triggering transactions together represent an actual or attempted market manipulation.

The system 110, or more specifically the alert management subsystem 120, also provides to the user an opportunity to enter comments as part of the reasoning out analysis. The comments are maintained and linked to the respective transaction and/or unique identifiers included in the alert data set 112, and the comments may then be displayed as part of the commentary of the alert transaction/event log.

In brief summary, the pattern definition subsystem 100, using the user configured and/or selected rules, defines the eligible transactions and events and thus controls what is identified in the alert data sets 112. The alert management subsystem 120, using user configured and/or selected rules, organizes and provides user access to the underlying information, as commentary articulating the anomalous trading behavior along with the relationships between the respective eligible transactions and events identified in the alert data set 112, seamlessly and in chronological order. The user is thus not required to sift through data to try and identify the triggering transactions and events and/or the relevant market conditions. Rather, the system 100 provides the user in real time with the information needed to analyze the triggering transactions and events and their consequences on the market conditions in essentially real time, and to conclude if a generated alert is an actionable manipulation or attempted manipulation of the market. As needed, the user can readily use the alert data set 112 and the associated alert transaction/event commentary as evidence to support the prompt and efficient conclusion of the investigation.

## Claims

1. A system for implementing one or more predetermined pattern rules to investigate anomalous trading activity in a trading venue including:
one or more processors adapted to filter real time data to identify eligible transactions and events for inclusion in one or more data sets based on associated first predetermined criteria and attributes associated with the predetermined pattern rules, the one or more processors capturing identifiers for the respective eligible transactions and events;
one or more processors configured to
generate an alert when the eligible transactions and events satisfy the predetermined pattern rules,
retain the generated alert and the identifiers of the eligible transactions and events corresponding to the alert as an alert data set, and
utilize the identifiers in the data alert set to retrieve the eligible transactions and events and selectively combine the transactions and events into one or more of annotated logs, lists, charts and graphs that in chronological order articulate the particular eligible events and transactions that triggered the alert and associated market conditions as defined by the eligible transactions and events identified in the alert data set.

2. The system of claim 1 further including one or more processors adapted to generate multiple alerts and retain the respective alerts and the identifiers of the corresponding eligible transactions and events in multiple alert data sets.

3. The system of claim 2 further including
a user interface through which a user updates one or more of the predetermined pattern rules, and
one or more processors configured to apply the updated predetermined pattern rules to the real time data.

4. The system of claim 1 wherein the one or more processors are adapted to graphically overlay the identified triggering transactions and events on market conditions that are determined from the identified eligible transactions and events of the alert data set.

5. The system of claim 1 wherein the one or more processors are adapted to provide commentary in the form of an annotated chronological log of the triggering transactions and events.

6. The system of claim 5 wherein the one or more processors are adapted to produce annotations of the log as reasoning out strings in accordance with rules that specify the data elements to retrieve using the identifiers from the alert data set and terms that are determined using the retrieved transactions and events, and the combination of the transactions and events and the terms with text set forth in the rules.

7. The system of claim 1 wherein the one or more processors are configured to retain comments provided by a user relating to one or more of the triggering transactions and events identified in the alert data set as part of the commentary.

8. The system of claim 1 wherein the one or more processors are configured to associate a message with a given alert and to provide the associated message to the user when the processors determine that a given alert is triggered.

9. The system of claim 1 wherein the user configures and selects rules that set time spans, transaction sizes and other criteria for aggregation and define the conditions for triggering an alert.

10. The system of claim 9 wherein the one or more processors are configured to discard from the associated eligible transactions and events the transaction or events that occur outside an associated time span.

11. The system of claim 4 wherein the one or more processors are configured to graphically overlay information relating to the triggering transactions and events on an interactive graph of the associated market conditions.

12. The system of claim 11 wherein the interactive graph includes icons representing the triggering transactions and events that, when selected, provide to a user the corresponding reason out strings.

13. The system of claim 12 wherein the display updates to the time of occurrence of a user selected triggering transaction or event.

14. The system of claim 4 wherein the one or more processors graphically overlay the identified triggering transactions and events on a Bid -Offer graph that is based on the identified eligible transactions and events of the alert data set,

15. The system of claim 14 wherein the one or more processors overlay the identified triggering transactions and events correlated in time with the identified eligible transactions and events depicted on the Bid-Offer graph.

16. The system of claim 14 wherein the one or more processors display commentary in the form of annotations against the triggering transactions and events on the Bid-Offer graph.

17. The system of claim 4 wherein the one or more processors
graphically overlay the triggering transactions and events on the market conditions using an interactive market replay graphical user interface, and
traverse the market conditions, based on a user interactively selecting triggering transactions and events, by updating the market replay graphical user interface to correspond to the times of the selected transactions and events.

18. The system of claim 17 wherein the one or more processors display commentary in the form of annotations against the triggering transactions and events on the market replay graphical user interface.

19. The system of claim 18 wherein the one or more processors display multiple graphs, listings and combinations thereof and update the graphs, listings and combinations thereof to correspond in time to the selected transactions and events.
